# EUROPEAN PATENT SPECIFICATION

(11) **EP 3 382 912 B1**
(45) Date of publication and mention of the grant of the patent: **04.03.2020**
(21) Application number: 17305365.3
(22) Date of filing: 29.03.2017
(51) Int. Cl.: H04B 10/516, H04B 10/69

(54) **DIGITAL MODULATION METHOD, TRANSMISSION METHOD AND ASSOCIATED EQUIPMENT**
DIGITALES MODULATIONSVERFAHREN, ÜBERTRAGUNGSVERFAHREN UND ZUGEHÖRIGE AUSRÜSTUNG
PROCÉDÉ DE MODULATION NUMÉRIQUE, PROCÉDÉ DE TRANSMISSION ET ÉQUIPEMENT ASSOCIÉ

(43) Date of publication of application: 03.10.2018
(73) Proprietor: Nokia Solutions and Networks Oy, 02610 Espoo (FI)
(72) Inventor: RIOS MULLER, Rafael, 91620 Nozay (FR); CHARLET, Gabriel, 91620 Nozay (FR); RENAUDIER, Jérémie, 91620 Nozay (FR)
(74) Representative: Croonenbroek, Thomas Jakob

(56) References cited:
- EP-A1- 0 026 064
- EP-A1- 2 648 360
- ZHOU XIANG ET AL: "Advanced DSP for 400 Gb/s and Beyond Optical Networks", JOURNAL OF LIGHTWAVE TECHNOLOGY, IEEE SERVICE CENTER, NEW YORK, NY, US, vol. 32, no. 16, 15 August 2014 (2014-08-15), pages 2716-2725, XP011554199, ISSN: 0733-8724, DOI: 10.1109/JLT.2014.2321135 [retrieved on 2014-07-22]
- XIANG ZHOU ET AL: "Rate-adaptable optics for next generation long-haul transport networks", IEEE COMMUNICATIONS MAGAZINE, IEEE SERVICE CENTER, PISCATAWAY, US, vol. 51, no. 3, 1 March 2013 (2013-03-01), pages 41-49, XP011505041, ISSN: 0163-6804, DOI: 10.1109/MCOM.2013.6476864

## Description

### BACKGROUND OF THE INVENTION

The present invention refers to a digital modulation method and a transmission method for transmitting signals within an optical network.

In order to increase the throughput of the optical transmission networks, wavelength division multiplexing method combined with high order modulation formats have been developed. In order to further improve the spectral efficiency, the goal is to pack a higher number of channels within the same bandwidth. A known technique is to apply additional filtering to the signals modulated with high order modulation formats in order to reduce the spectral bandwidth of such signals leading to the possibility to multiplex a higher number of channels within a given spectral bandwidth. However, such filtering may lead to intersymbol interferences and a degradation of the signal to noise ratio. To avoid such interferences, Nyquist pulse shaping filtering such as raised cosine or root raised cosine filtering have been developed. With such filtering, the spectral occupancy of the signal can be adjusted by the choice of a roll-off factor, a small roll-off factor (close to zero) producing a signal with a narrow spectral occupancy. However, with small roll-off factors, the removed spectral content may correspond to a loss of the spectral content comprising the clock tones used for the timing recovery at destination. Indeed, clock tones are located at half of the symbol rate on both side of the carrier frequency (F +/- R/2 with R being the symbol rate and F being the carrier frequency) so that a filtering of frequencies corresponding to the clock tones would lead to a failure of the timing recovery and therefore to a loss of data.

One solution to overcome this problem is to transmit pilot tones dedicated to the timing recovery, for example by transmitting a known sequence of bits. However, such solution requires reserving a part of the spectral bandwidth to the pilot tones which would otherwise be used for data transmission leading therefore to a reduction of the capacity which is opposite to the goal of increasing the throughput.

It is known from the prior art the use of hybrid modulation format (X. Zhou, L.E. Nelson, P. Magill, "Rate-Adaptable Optcs for Next Generation Long-Haul Transport Networks", New Paradigms in Optical Communications and Networks, March 2013, 41-49) which can be used for realizing a fine granularity rate-adaptable transponder (X. Zhou and L. Nelson, "Advanced DSP for 400 Gb/s and Beyond Optical Networks", Journal of Lightwave Technology, 15 august 2014, 32, 16, 2716-2725).

### SUMMARY OF THE INVENTION

It is therefore a goal of the present invention to provide a method enabling the use of additional pulse shaping filtering with small roll-off factors while enabling timing recovery at destination.

Thus, the invention refers to a digital modulation method for signal transmission through an optical network comprising an encoding and mapping step of producing a series of modulation symbols from a bitstream wherein the series of produced modulation symbols can be divided into successive hybrid symbol sequences, a hybrid symbol sequence comprising symbols of at least two different modulation formats, such hybrid symbol sequences producing clock tones at frequencies corresponding to a shift of a fraction of the symbol rate on both sides of the carrier frequency, the said fraction being smaller than the fraction obtained with symbol sequences comprising a single modulation format, the said clock tones enabling timing recovery after transmission of the signal.

According to another aspect of the invention, a higher transmission power is allocated to the symbols having a higher order modulation format.

According to another aspect of the invention, the transmission power allocation is chosen in order to produce equivalent bit error rates with the different modulation formats.

According to another aspect of the invention, the different modulation formats refer to quadrature amplitude modulation formats.

According to another aspect of the invention, the hybrid symbol sequence comprises two symbols associated respectively with two different modulation formats.

According to another aspect of the invention, such method is used when the spectral bandwidth allocated to a channel is smaller than a predetermined value.

According to another aspect of the invention, the predetermined value is determined based on the spectral bandwidth of the filters crossed along the transmission.

According to another aspect of the invention, the digital modulation method comprises a step of pulse shaping wherein baseband signals with a predetermined roll-off are produced from the series of modulation symbols and wherein the predetermined value implies the use of a roll-off value smaller than 0.4.

According to another aspect of the invention, the digital modulation method comprises a step of sampling wherein baseband signals are applied to a carrier signal to produce a sampled signal.

The present invention also refers to a method for transmitting an optical signal from an ingress node to an egress node comprising:
- a step for determining the available spectral bandwidth for the transmission channels,
- a step for determining a standard modulation format,
- a step for determining a hybrid modulation format comprising a combination of at least two modulation formats,
- a step of choosing between the standard modulation format and the hybrid modulation format according to the determined available spectral bandwidth,
- a step of modulating a carrier signal according to the chosen modulation format at the ingress node,
- a step of transmitting the modulated signal from the ingress node to the egress node via optical transmission means,
- a step of demodulating the transmitted signal at the egress node,
wherein in case of choice of the hybrid modulation format, the modulating step is achieved in accordance with the digital modulation method of one of the previous claims.

According to another aspect of the invention, the demodulating step comprises:
- a sub-step for compensating chromatic dispersion,
- a sub-step of timing recovery comprising the detection of clock tones of the transmitted signal, the frequency of the clock tones depending on the modulation format choice,
- a sub-step of polarization demultiplexing depending on the modulation format choice,
- a sub-step of carrier recovery depending on the modulation format choice,
- a sub-step of demapping and decoding to retrieve the bitstream depending on the modulation format choice.

The present invention also refers to an optical transmitter comprising an encoder and a mapper configured for producing a series of modulation symbols of at least a first and a second modulation formats from a bitstream, wherein the encoder and the mapper are configured for producing successive hybrid symbol sequences, a hybrid symbol sequence comprising symbols of at least two different modulation formats, such hybrid symbol sequences producing clock tones at frequencies corresponding to a shift of a fraction of the symbol rate on both sides of the carrier frequency, the said fraction being smaller than the fraction obtained with symbol sequences comprising a single modulation format.

According to another aspect of the invention, the encoder and the mapper are also configured for producing a series of modulation symbols having the same modulation format from a bitstream and wherein the optical transmitter also comprises a processing unit configured for determining an available spectral bandwidth for the transmission channels and for determining a modulation format to apply according to the said available spectral bandwidth and wherein the encoder and the mapper are configured for applying the determined modulation format to produce a series of modulation symbols.

According to another aspect of the invention, the optical transmitter also comprises a pulse shaping unit configured for producing modulation signals based on the produced modulation symbols and based on a predetermined filtering function having a predetermined roll-off.

According to another aspect of the invention, the optical transmitter comprises a sampling or resampling unit configured for applying the produced modulation signal to a carrier signal to produce a sampled signal.

The present invention also refers to an optical receiver configured for receiving a sampled signal transmitted from an optical transmitter through optical transmission means, the said optical receiver comprising:
- a chromatic dispersion compensation unit configured for applying a chromatic dispersion filter on the received sampled signal,
- a timing recovery unit configured for detecting clock tones at frequencies depending on the modulation format used by the transmitter
- a polarization demultiplexer configured for separating two orthogonal polarization signals of the transmitted sampled signal,
- a carrier recovery unit configured for retrieving the modulation symbols based on the modulation format used by the transmitter,
- a demapper and a decoder configured for retrieving the bitstream based on the retrieved modulation symbols.

According to another aspect of the invention, the optical receiver comprises a local oscillator and configured for applying coherent detection to the received sampled signal.

The present invention also refers to an optical network comprising transmitters and receivers as described previously.

### BRIEF DESCRIPTION OF THE DRAWINGS

FIG.1 is a diagram of a transmitter and the method steps associated with the transmitter,
FIG.2a to 2c are constellation diagrams of different types of modulation formats,
FIG.3 is a diagram of a series of transmitted modulation symbols according to a standard modulation format,
FIG.4 is a diagram of a series of transmitted modulation symbols according to a hybrid modulation format,
FIG.5a to 5c represent graphs of the transmitted power in function of the spectral frequency for different roll-off factors,
FIG.6 is a diagram of a receiver and the method steps associated with the receiver,
Fig.7 is a flowchart of the different of a method for transmitting a signal according to the present invention,
Fig.8 is a flowchart of the sub-steps to decide the type of modulation has to be used for the transmission.

### DETAILED DESCRIPTION OF THE INVENTION

The following achievements are examples. Although, the specification refers to one or several embodiments, it does not imply that each reference refers to the same embodiment or that the features apply only to a single embodiment. Simple features of different embodiments can also be combined to provide other embodiments.

The present invention refers to a digital modulation method for modulating signals in an optical network wherein optical signals are transmitted through lightpaths from an ingress node comprising a transmitter to an egress node comprising a receiver. In particular, the present invention refers to the use of a hybrid modulation format wherein at least two different modulation formats are combined according to an alternate sequence for modulating the bitstream into a hybrid sequence of modulation symbols. Furthermore, different powers are assigned to the symbols according to their modulation format and the cyclic variation of power produces clock tones at a lower frequency with respect to a modulation with a single modulation format. The said clock tones are used to retrieve timing information at the receiver of the egress node.

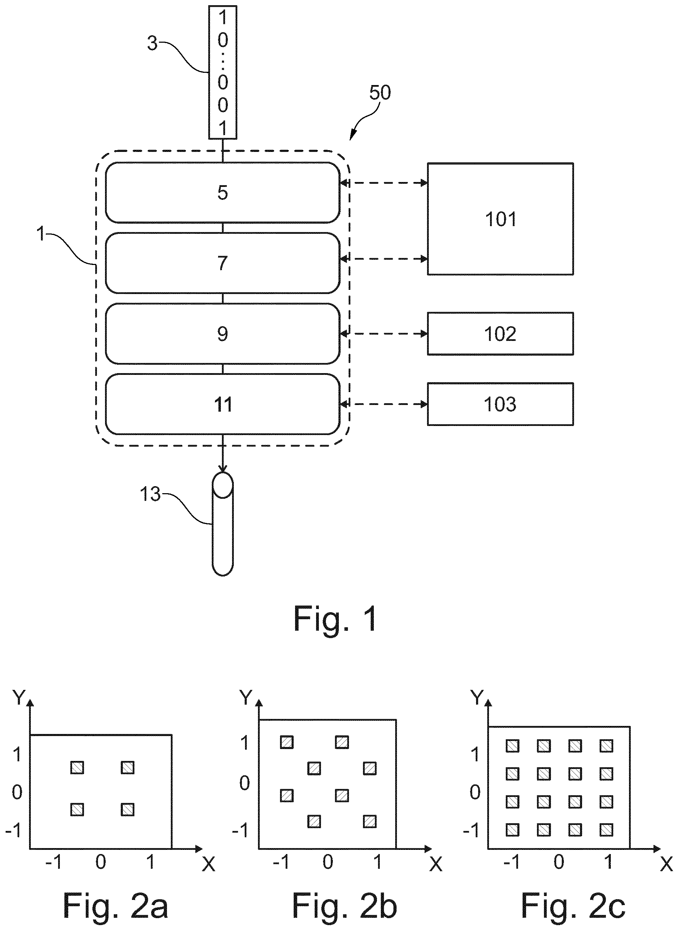

Fig.1 represents a diagram of elements of a transmitter 1 located in an ingress node 50. The different steps of a modulation method which will be described in more details in the following of the description are also represented in Fig.1 wherein each step is associated with the corresponding element of the transmitter 1. The transmitter 1 is designed for producing an optical signal to be sent toward an egress node (not represented in fig.1) from a data bitstream 3. The bitstream 3 comprises zeros and ones and is transmitted to an encoder 5 and a mapper 7 wherein bits are gathered in a bit string having a length depending on the modulation format. The length of the bit string corresponds to the number of bits per symbol of the used modulation format. Each bit string is then mapped to a modulation symbol. This encoding and mapping step 101 enables therefore to produce a series of modulation symbols. For example, if the modulation format used for the encoding and mapping step 101 is a 4-Quadrature Amplitude Modulation (4-QAM) format (also called Quadrature Phase Shift Keying (QPSK) format) corresponding to a two bits per symbol modulation format, the successive strings of two bits are converted into one symbol among the four possible symbols provided by the 4-QAM modulation format.

Fig.2a shows a constellation diagram representing the four different symbols of the 4-QAM format. The x-axis corresponds to the inphase or real component of the signal and the y-axis corresponds to the quadrature or imaginary components of the signal.

In the same way, in the case of an 8-Quadrature Amplitude Modulation (8-QAM) format corresponding to a three bits per symbol modulation format, the successive strings of three bits are converted into one symbol among the eight possible symbols provided by the 8-QAM modulation format. Fig.2b shows a constellation diagram representing the eight different symbols.

Accordingly, in the case of a 16-Quadrature Amplitude Modulation (16-QAM) format corresponding to a four bits per symbol modulation format, the successive strings of four bits are converted into one symbol among the sixteen possible symbols provided by the 16-QAM modulation format. Fig.2c shows a constellation diagram representing the sixteen different symbols. The present invention is not limited to the above mentioned modulation format so that other modulation formats may be used without departing from the scope of the invention.

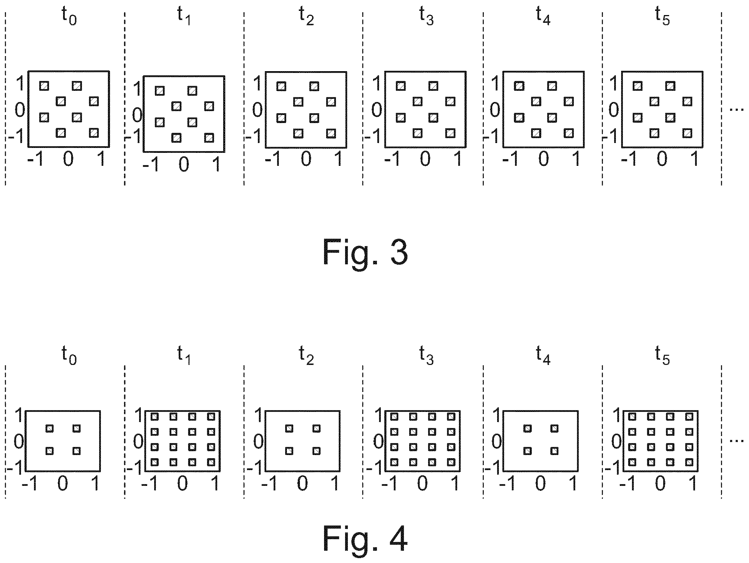

Thus, in the case of an 8-QAM modulation format, at each instant noted t₀, t₁, t₂...t₅ in fig.3, one of the eight symbols corresponding to a three-bit string is provided to a pulse shaping unit 9 (the eight symbols are represented at each instant in figure 3 but only one is transmitted). The duration between two successive instant t₀, t₁...t₅ corresponds to the symbol rate.

In the case of a hybrid modulation format comprising for example a 4-QAM (fig.2a) and a 16-QAM (fig.2c) in alternance, at the instant t₀, a 4-QAM symbol corresponding to a two-bit string is transmitted to the pulse-shaping unit 9 and at the following instant t₁, a 16-QAM symbol corresponding to a four-bit string is transmitted to the pulse shaping unit 9 and alternatively for each symbol as described in figure 4 (the four or sixteen symbols are represented at each instant in figure 4 but only one is transmitted). With such alternation, the average symbol rate is the same as the symbol rate obtained with the 8-QAM modulation format of figure 3 so that a modulation according to a 8-QAM modulation format or to a hybrid modulation format with 4-QAM and 16-QAM alternatively produce the same throughput.

Furthermore, in the case of a hybrid modulation, the transmission power assigned to each symbol can be set according to its modulation format. The power is determined, for example, in order to obtain similar bit error rates (BER) for the different modulation formats. For example, in the case described in figure 4, the power assigned to the 16-QAM symbols will be higher than the power assigned to the 4-QAM symbols in order to obtain a similar BER for all the transmitted symbols.

Such alternation of two different modulation format (fig.4 for example) with two different transmission powers produces clock tones corresponding to spectral rays shifted of +/-R/4 from the carrier frequency F with R being the symbol rate whereas these clock tones correspond to spectral rays shifted of +/-R/2 from the carrier frequency F with a single modulation format (fig.3 for example). Such shift of the clock tones frequencies enables timing recovery at the egress node even if the spectral part of the signal located at frequencies around F+/-R/2 are filtered out due, for example, to a small roll-off in the pulse-shapping filter which would be described in the following of the description.

Other alternate scheme of the two modulation formats can also be used, for example a sequence with two symbols modulated with a 4-QAM modulation format and one symbol modulated with a 16-QAM modulation format, such sequence being repeated over time. In such case, the clock tones are located at frequencies located at F+/-R/6. Any other possible sequence pattern using two modulation formats is conceivable.

It is also conceivable to define a sequence using more than two modulation formats, for example a sequence of symbols using a 4-QAM modulation format for the first symbol, a 8-QAM modulation format for the second symbol and a 16-QAM modulation format for the third symbol, such sequence being repeated over time. A higher power being applied to the 16-QAM symbols (with respect to the 8-QAM symbols (and the 4-QAM symbols)) and a lower power being applied to the 4-QAM symbols (with respect to the 8-QAM symbols (and the 16-QAM symbols)). Any other pattern combining at least two modulation formats repeated over time is also conceivable without going beyond the scope of the present invention.

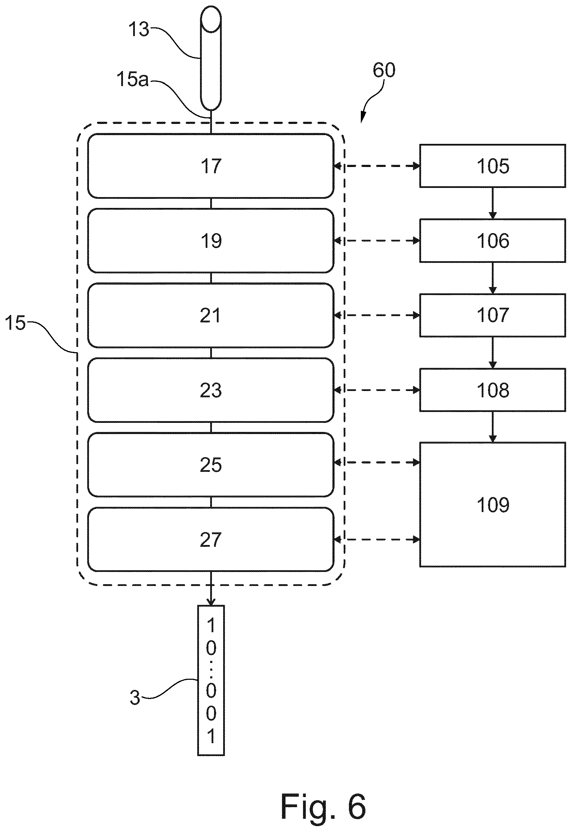

Referring to fig. 1, the series of symbols obtained from the mapper 7 based on the chosen modulation are then transmitted to a pulse shaping unit 9 wherein a pulse shaping step 102 is applied to produce a modulation signal. The pulse shaping corresponds to the filtering of the modulated signal in order to reduce its spectral bandwidth. Such spectral bandwidth reduction is obtained by smoothing the signal to avoid sharp edges. Indeed, sharp edges of the signal produce a frequency spectrum with many harmonics and therefore a wide frequency spectrum whereas a pure sinusoidal signal has a single frequency spectrum. However, when applying a pulse shaping filter, care should be taken to avoid inter-symbol interference (ISI). A well-known way to avoid such ISI is to use a truncated Nyquist pulse shaping such as a raised cosine pulse shaping or more preferably a root raised cosine pulse shaping wherein a part of the filtering is applied at the transmitter 1 and another part is applied at the receiver 15 (represented in fig.6). With such pulse shaping, the spectral bandwidth of the signal can be modified by changing the value of a roll-off factor. Furthermore, the value of the roll-off factor may be chosen according to the spectral bandwidth of the filters located along the lightpath between the transmitter 1 and the receiver 15. The pulse shaping step produces baseband signals with a predetermined roll-off from the series of modulation symbols.

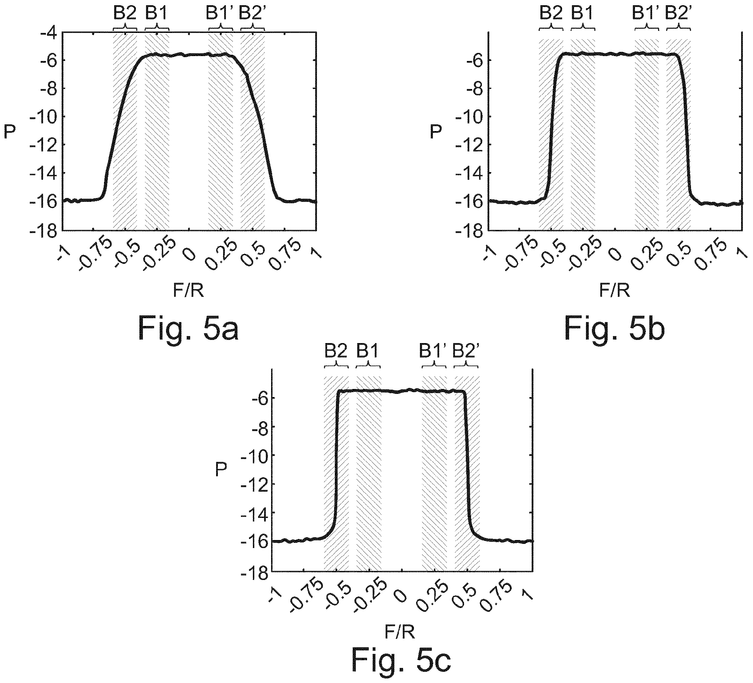

Fig.5a, 5b and 5c represent respectively the spectral bandwidth of the signal for three different values of the roll-off factor, respectively 0.4, 0.1 and 0.002. The x-axis represents the ratio of the frequency and the symbol rate and the y-axis represents the power of the signal. The frequency stripes B1 and B1' correspond to the frequencies of the clock tones in the case wherein a single modulation format is used and the stripes B2 and B2' correspond to the frequencies of the clock tones in the case wherein a hydrid modulation format with an alternation of 4-QAM and 16-QAM modulation formats is used. As indicated previously, the stripes B2 and B2' are located respectively around -½ and ½ (therefore around F+/-R/2 with R the symbol rate as the x-axys is the ratio of the frequency and the symbol rate) whereas the stripes B1 and B1' are located respectively around - ¼ and ¼ (therefore around F+/-R/4 with R the symbol rate).

In the case of a roll-off factor of 0.4 represented in fig.5a, the edges of the spectral bandwidth are located outside of the bands B2 and B2' so that the clock tones produced by a single modulation format are not altered by the pulse shaping filtering.

In the case of a roll-off factor of 0.1 represented in fig.5b, the edges of the spectral bandwidth start to overlap with the bands B2 and B2' so that the clock tones produced by a single modulation format may be altered by the pulse shaping filtering.

In the case of a roll-off factor of 0.002 represented in fig.5c, the edges of the spectral bandwidth overlap most of the bands B2 and B2' so that the clock tones produced by a single modulation format are clearly altered by the pulse shaping filtering and timing recovery at destination using clock tones located in the frequency bands B2 and B2' will probably not be possible. However, even with a roll-off factor of 0.002, the bands B1 and B1' remain within the spectral bandwidth of the transmitted signal and are not altered so that timing recovery can be achieved at destination with very small roll-off factor (<0.4) if hybrid modulation formats as disclosed previously are used.

Thus, the use of a hybrid modulation format enables to use very small roll-off factors, notably smaller than 0.4, without compromising timing recovery at destination and without requiring additional transmitted data leading therefore to an optimization of the overall bandwidth and throughput (the small roll-off factor leading to channels having a smaller spectral bandwidth so that more channels can be transmitted within a given frequency band). Thus, in case the available spectral bandwidth along the path lead to the selection of a roll-off factor having a predetermined value smaller than a predetermined value, for example 0.4, a hybrid modulation format is chosen for the modulation of the transmitted signal.

Referring back to fig.1, the modulation signal obtained with the pulse shaping unit 9 is then transmitted to a sampling or resampling unit 11 wherein the baseband signals are applied to a carrier signal to produce a sampled signal according to a sampling step 103. The sampled signal may also be resampled to obtain an outgoing signal with the desired sampling rate in this sampling step. The obtained sampled signal is then transmitted through an optical fiber 13 toward an egress node 60 (represented in fig.6).

Fig.6 represents a diagram of the elements of a receiver 15 located in an egress node 60. The receiver 15 may be a coherent receiver with a local oscillator (not represented). The input 15a of the receiver 15 is linked to an optical fiber 13. The received sampled signal is first transmitted to a chromatic dispersion compensation unit 17 wherein a chromatic dispersion compensation step 105 is applied. Chromatic dispersion compensation techniques are well-known in the state of the art and will not be described in more details.

The signal is then transmitted to a timing recovery unit 19 wherein the clock tones are used to achieve such timing recovery and enable tuning the receiver 15 in order to obtain a satisfying decoding of the transmitted data. As described previously, depending on the used modulation format, the clock tones may be located in different part of the signal spectrum.

Thus, in the case of a standard modulation format, for example the 8-QAM modulation format described in Fig.3, the clock tones are located at the frequencies F+/-R/2 and in the case of a hybrid modulation format comprising an alternation of two modulation formats, for example an alternation of 4-QAM and 16-QAM modulation format as described in Fig.4, the clock tones are located at the frequencies F+/-R/4. Thus, a signal indicating the modulation format is transmitted to the timing recovery unit 19 which is configured for retrieving the clock tones in the part of the frequency spectrum associated with the used modulation format. The modulation format can be chosen by a remote control plane unit (not represented) located in a central controller of the network. Signals indicating the modulation format to be used may be transmitted from the control plane unit to a processing unit (not represented) of the ingress node 50 and the egress node 60.

The modulation format may be chosen based on different parameters, notably the required throughput of the transmission, the available spectral bandwidth for the transmission, the spectral bandwidth of the filters located along the lightpath between the ingress node 50 and the egress node 60. The decision may be made by the control plane unit.
The present invention also refers to a communication network comprising a plurality of nodes, the nodes comprising a transmitter and/or a receiver according to the previous description. The network may therefore transmit signals according to a standard or a hybrid modulation format depending on the features of the path between the ingress node and the egress node and the requirements for the signal (throughput, quality of signal...). The network may comprise a control plane unit configured for managing the different transmissions across the network.

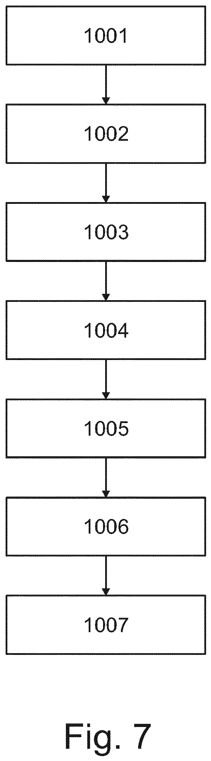

Fig.7 represents the different steps of a possible method for transmitting an optical signal from an ingress node 50 to an egress node 60.

The first step 1001 refers to the determination of the available spectral bandwidth for the transmission channels. The available spectral bandwidth is determined based on the spectral bandwidth of all the filters crossed along the path from the ingress node to the egress node.

The second step 1002 refers to a determination of a standard modulation format. The standard modulation format may be selected based on the required throughput of the transmission.

The third step 1003 refers to a determination of a hybrid modulation format. The hybrid modulation format may be be selected to produce a bit per symbol ratio equivalent to the bit per symbol ratio produced by the selected standard modulation format.

The fourth step 1004 refers to the choice between the standard modulation format and the hybrid modulation format according to the determined available spectral bandwidth.

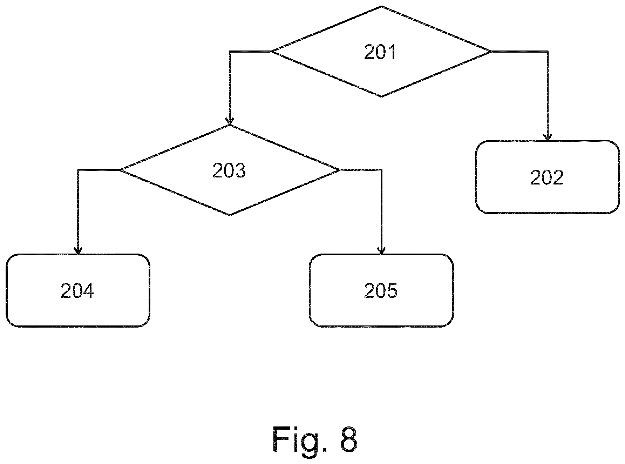

Fig.8 represents a flowchart of the different sub-steps of the decision process to decide between a hybrid modulation format and a standard modulation format. In this example, we suppose that there is only two possible modulation format, for example a 8-QAM modulation format as described in fig.3 and a hybrid modulation format with a combination of 4-QAM and 16-QAM modulation formats as described in fig.4.

The first sub-step 201 corresponds to the comparison between a chosen roll-off and a first predetermined threshold (for example 0.4). The chosen roll-off is determined for example based on the available spectral bandwidth, the number of channels and the filters located along the lightpath between the ingress node and the egress node.

If the chosen roll-off is smaller than or equal to the first predetermined threshold then the process goes to the sub-step 202 which corresponds to the selection of a hybrid modulation format, such as the modulation format described in fig.4.

If the chosen roll-off is higher than the first predetermined threshold then the method goes to the sub-step 203 wherein the bandwidth of the filters at the transmitter and along the lightpath from the ingress node to the egress node is compared to a second predetermined threshold. Alternatively, the spectral bandwidth allocated to a channel may be compared to a second predetermined threshold.

If the bandwidth is higher than the second predetermined threshold, then the process goes to sub-step 204 wherein a standard modulation format is selected.

If the bandwidth is lower or equal to the second predetermined threshold, then the process goes to sub-step 205 wherein a hybrid modulation format is selected.

The fifth step 1005 refers to the modulation of a carrier signal according to the chosen modulation format at the ingress node 50. Such step corresponds to the steps 101 to 103 as disclosed in fig. 1.

The sixth step 1006 refers to the transmission of the modulated signal from the ingress node 50 to the egress node 60 via optical transmission means such as an optical fiber 13.

The seventh step 1007 refers to the demodulation of the transmitted signal at the egress node 60. Such step corresponds to the steps 105 to 109 as disclosed in fig.6.

Thus, the use of a hybrid modulation format made from a series of hybrid symbol sequences, a hybrid symbol sequence comprising symbols of at least two different modulation formats enables to use a pulse shaping filter with a very small roll-off factor while enabling timing recovery at destination without requiring the transmission of additional dedicated clock signal. Such hybrid modulation format is useful in case of a narrow spectral bandwidth along the path from the ingress node to the egress node in order to optimize the spectral efficiency while ensuring an acceptable quality of signal at destination.

The functions of the various elements shown in the FIGs., including any functional blocks labeled as "processors" or "processing units", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. Digital modulation method for signal transmission through an optical network comprising an encoding and mapping step (101) of producing a series of modulation symbols from a bitstream,
**characterized in that** the series of produced modulation symbols can be divided into successive hybrid symbol sequences, a hybrid symbol sequence comprising symbols of at least two different modulation formats, different powers being assigned to the symbols according to their modulation formats, such hybrid symbol sequences and assigned powers producing clock tones at frequencies corresponding to a shift of a fraction of the symbol rate on both sides of the carrier frequency, the said fraction being smaller than the fraction obtained with symbol sequences comprising a single modulation format, the said clock tones enabling timing recovery after transmission of the signal.

2. Digital modulation method in accordance with claim 1 wherein a higher transmission power is allocated to the symbols having a higher order modulation format.

3. Digital modulation method in accordance with claim 2 wherein the transmission power allocation is chosen in order to produce equivalent bit error rates with the different modulation formats.

4. Digital modulation method in accordance with one of the previous claims wherein the different modulation formats refer to quadrature amplitude modulation formats or phase shift keying formats.

5. Digital modulation method in accordance with one of the previous claims wherein the hybrid symbol sequence comprises two symbols associated respectively with two different modulation formats.

6. Digital modulation method in accordance with one of the previous claims wherein such method is used when the spectral bandwidth allocated to a channel is smaller than a predetermined value.

7. Digital modulation method in accordance with claim 6 wherein the predetermined value is determined based on the spectral bandwidth of the filters crossed along the transmission.

8. Digital modulation method in accordance with claim 6 or 7 comprising a step of pulse shaping (102) wherein baseband signals with a predetermined roll-off are produced from the series of modulation symbols and wherein the predetermined value implies the use of a roll-off value smaller than 0.4.

9. Digital modulation method in accordance with claim 8 comprising a step of sampling (103) wherein baseband signals are applied to a carrier signal to produce a sampled signal.

10. Method for transmitting an optical signal from an ingress node (50) to an egress node (60) comprising:
- a step (1001) for determining the available spectral bandwidth for the transmission channels,
- a step (1002) for determining a standard modulation format,
- a step (1003) for determining a hybrid modulation format comprising a combination of at least two modulation formats wherein different powers are assigned to the symbols according to their modulation formats,
- a step (1004) of choosing between the standard modulation format and the hybrid modulation format according to the determined available spectral bandwidth,
- a step (1005) of modulating a carrier signal according to the chosen modulation format at the ingress node (50),
- a step (1006) of transmitting the modulated signal from the ingress node (50) to the egress node (60) via optical transmission means (13),
- a step (1007) of demodulating the transmitted signal at the egress node (60),
wherein in case of choice of the hybrid modulation format, the modulating step (1005) is achieved in accordance with the digital modulation method of one of the previous claims.

11. Method in accordance with claim 10 wherein the demodulating step (1007) comprises:
- a sub-step (105) for compensating chromatic dispersion,
- a sub-step (106) of timing recovery comprising the detection of clock tones of the transmitted signal, the frequency of the clock tones depending on the modulation format choice,
- a sub-step (107) of polarization demultiplexing depending on the modulation format choice,
- a sub-step (108) of carrier recovery depending on the modulation format choice,
- a sub-step (109) of demapping and decoding to retrieve the bitstream depending on the modulation format choice.

12. Optical transmitter (1) comprising an encoder (5) and a mapper (7) configured for producing a series of modulation symbols of at least a first and a second modulation formats from a bitstream, **characterized in that** the encoder (5) and the mapper (7) are configured for producing successive hybrid symbol sequences, a hybrid symbol sequence comprising symbols of at least two different modulation formats, different powers being assigned to the symbols according to their modulation formats, such hybrid symbol sequences and assigned powers producing clock tones at frequencies corresponding to a shift of a fraction of the symbol rate on both sides of the carrier frequency, the said fraction being smaller than the fraction obtained with symbol sequences comprising a single modulation format.

13. Optical transmitter (1) in accordance with claim 12 wherein the encoder (5) and the mapper (7) are also configured for producing a series of modulation symbols having the same modulation format from a bitstream and wherein the optical transmitter (1) also comprises a processing unit configured for determining an available spectral bandwidth for the transmission channels and for determining a modulation format to apply according to the said available spectral bandwidth and wherein the encoder (5) and the mapper (7) are configured for applying the determined modulation format to produce a series of modulation symbols.

14. Optical transmitter (1) in accordance with claim 12 or 13 also comprising a pulse shaping unit (9) configured for producing modulation signals based on the produced modulation symbols and based on a predetermined filtering function having a predetermined roll-off.

15. Optical receiver (15) configured for receiving a sampled signal transmitted from an optical transmitter (1) in accordance with one of the claims 12 to 15 through optical transmission means (13), the said optical receiver comprising:
- a chromatic dispersion compensation unit (17) configured for applying a chromatic dispersion filter on the received sampled signal,
- a timing recovery unit (19) configured for detecting clock tones at frequencies depending on the modulation format used by the transmitter
- a polarization demultiplexer (21) configured for separating two orthogonal polarization signals of the transmitted sampled signal,
- a carrier recovery unit (23) configured for retrieving the modulation symbols based on the modulation format used by the transmitter (1),
- a demapper (25) and a decoder (27) configured for retrieving the bitstream based on the retrieved modulation symbols.

## Patentansprüche

1. Digitales Modulationsverfahren für eine Signalübertragung durch ein optisches Netzwerk, das einen Codierungs- und einen Abbildungsschritt (101) zum Erzeugen einer Reihe von Modulationssymbolen aus einem Bitstrom umfasst,
**dadurch gekennzeichnet, dass** die Reihe von erzeugten Modulationssymbolen in aufeinanderfolgende hybride Symbolsequenzen geteilt werden kann, wobei eine hybride Symbolsequenz Symbole von mindestens zwei unterschiedlichen Modulationsformaten umfasst, wobei zu den Symbolen gemäß ihren Modulationsformaten unterschiedliche Leistungen gehören, wobei diese hybriden Symbolsequenzen und die zugehörigen Leistungen Taktsignaltöne auf Frequenzen erzeugen, die einer Verschiebung eines Bruchteils der Symbolrate auf beiden Seiten der Trägerfrequenz entsprechen, wobei der Bruchteil kleiner ist, als der Bruchteil, der mit den Symbolsequenzen erhalten wird, die ein einziges Modulationsformat umfassen, wobei die Taktsignaltöne nach der Übertragung des Signals eine Zeitablaufplanwiederherstellung aktivieren.

2. Digitales Modulationsverfahren nach Anspruch 1, wobei den Symbolen, die ein Modulationsformat höherer Ordnung aufweisen, eine höhere Übertragungsleistung zugeteilt wird.

3. Digitales Modulationsverfahren nach Anspruch 2, wobei die Übertragungsleistungszuteilung gewählt wird, um äquivalente Bitfehlerraten mit den unterschiedlichen Modulationsformaten zu erzeugen.

4. Digitales Modulationsverfahren nach einem der vorhergehenden Ansprüche, wobei sich die unterschiedlichen Modulationsformate auf Quadratur-Amplitudenmodulationsformate oder auf Phasenumtastungsformate beziehen.

5. Digitales Modulationsverfahren nach einem der vorhergehenden Ansprüche, wobei die hybride Symbolsequenz zwei Symbole umfasst, die entsprechend zu zwei unterschiedlichen Modulationsformaten gehören.

6. Digitales Modulationsverfahren nach einem der vorhergehenden Ansprüche, wobei dieses Verfahren verwendet wird, wenn die spektrale Bandbreite, die einem Kanal zugeteilt wird, kleiner als ein vorbestimmter Wert ist.

7. Digitales Modulationsverfahren nach Anspruch 6, wobei der vorbestimmte Wert aufgrund der spektralen Bandbreite der Filter ermittelt wird, die während der Übertragung durchquert werden.

8. Digitales Modulationsverfahren nach Anspruch 6 oder 7, das einen Schritt eines Pulsformens (102) umfasst, wobei aus der Reihe von Modulationssymbolen Basisbandsignale mit einer vorbestimmten Dämpfung erzeugt werden und wobei der vorbestimmte Wert die Verwendung eines Dämpfungswerts von weniger als 0,4 impliziert.

9. Digitales Modulationsverfahren nach Anspruch 8, das einen Schritt eines Abtastens (103) umfasst, wobei die Basisbandsignale auf ein Trägersignal angewandt werden, um ein abgetastetes Signal zu erzeugen.

10. Verfahren zum Übertragen eines optischen Signals von einem Eingangsknoten (50) zu einem Ausgangsknoten (60), umfassend:
einen Schritt (1001) zum Ermitteln der verfügbaren spektralen Bandbreite für die Übertragungskanäle,
einen Schritt (1002) zum Ermitteln eines Standardmodulationsformats,
einen Schritt (1003) zum Ermitteln eines hybriden Modulationsformats, das eine Kombination von mindestens zwei Modulationsformaten umfasst, wobei zu den Symbolen gemäß ihren Modulationsformaten unterschiedliche Leistungen gehören,
einen Schritt (1004) eines Wählens zwischen dem Standardmodulationsformat und dem hybriden Modulationsformat gemäß der ermittelten verfügbaren spektralen Bandbreite,
einen Schritt (1005) eines Modulierens eines Trägersignals gemäß dem gewählten Modulationsformat an dem Eingangsknoten (50),
einen Schritt (1006) eines Übertragens des modulierten Signals von dem Eingangsknoten (50) zu dem Ausgangsknoten (60) mithilfe eines optischen Übertragungselements (13),
einen Schritt (1007) eines Demodulierens des übertragenen Signals in dem Ausgangsknoten (60), wobei in dem Fall einer Wahl des hybriden Modulationsformats der Modulierungsschritt (1005) gemäß dem digitalen Modulationsverfahren nach einem der vorhergehenden Ansprüche erreicht wird.

11. Verfahren nach Anspruch 10, wobei der Demodulierungsschritt (1007) umfasst:
einen Teilschritt (105) zum Kompensieren einer chromatischen Dispersion,
einen Teilschritt (106) zum Wiederherstellen eines Zeitablaufplans, der das Erkennen von Taktsignaltönen des übertragenen Signals umfasst, wobei die Frequenz der Taktsignaltöne von der Modulationsformatwahl abhängig ist,
einen Teilschritt (107) eines Demultiplexens einer Polarisation in Abhängigkeit von der Modulationsformatwahl,
einen Teilschritt (108) eines Wiederherstellens eines Trägersignals in Abhängigkeit von der Modulationsformatwahl,
einen Teilschritt (109) eines Rückbildens und Decodierens, um den Bitstrom in Abhängigkeit von der Modulationsformatwahl zurückzugewinnen.

12. Optischer Sender (1), der eine Codiereinheit (5) und eine Abbildungseinheit (7) umfasst, die konfiguriert sind zum Erzeugen einer Reihe von Modulationssymbolen mit mindestens einem ersten und einem zweiten Modulationsformat aus einem Bitstrom, **dadurch gekennzeichnet, dass** die Codiereinheit (5) und die Abbildungseinheit (7) konfiguriert sind zum Erzeugen von aufeinanderfolgenden hybriden Symbolsequenzen, wobei eine hybride Symbolsequenz Symbole von mindestens zwei unterschiedlichen Modulationsformaten umfasst, wobei zu den Symbolen gemäß ihren Modulationsformaten unterschiedliche Leistungen gehören, wobei diese hybriden Symbolsequenzen und die zugehörigen Leistungen Taktsignaltöne auf Frequenzen erzeugen, die einer Verschiebung eines Bruchteils der Symbolrate auf beiden Seiten der Trägerfrequenz entsprechen, wobei der Bruchteil kleiner ist, als der Bruchteil, der mit den Symbolsequenzen erhalten wird, die ein einziges Modulationsformat umfassen.

13. Optischer Sender (1) nach Anspruch 12, wobei die Codiereinheit (5) und die Abbildungseinheit (7) auch konfiguriert sind zum Erzeugen aus einem Bitstrom einer Reihe von Modulationssymbolen, die das gleiche Modulationsformat aufweisen, und wobei der optische Sender (1) auch eine Verarbeitungseinheit umfasst, die konfiguriert ist zum Ermitteln der verfügbaren spektralen Bandbreite für die Übertragungskanäle und zum Ermitteln eines Modulationsformats, das gemäß der verfügbaren spektralen Bandbreite angewandt wird, und wobei die Codiereinheit (5) und die Abbildungseinheit (7) konfiguriert sind zum Anwenden des ermittelten Modulationsformats, um eine Reihe von Modulationssymbolen zu erzeugen.

14. Optischer Sender (1) nach Anspruch 12 oder 13, der auch eine Pulsformungseinheit (9) umfasst, die konfiguriert ist zum Erzeugen von Modulationssignalen aufgrund der erzeugten Modulationssymbole und aufgrund einer vorbestimmten Filterfunktion, die eine vorbestimmte Dämpfung aufweist.

15. Optischer Empfänger (15), der konfiguriert ist zum Empfangen eines abgetasteten Signals, das von einem optischen Sender (1) nach einem der Ansprüche 12 bis 15 mithilfe eines optischen Übertragungselements (13) übertragen wird, wobei der optische Empfänger umfasst:
eine chromatische Dispersionskompensationseinheit (17), die konfiguriert ist zum Anwenden eines chromatischen Dispersionsfilters auf das empfangene abgetastete Signal,
eine Zeitablaufplanwiederherstellungseinheit (19), die konfiguriert ist zum Erkennen von Taktsignaltönen auf Frequenzen, die von dem Modulationsformat abhängig sind, das von dem Sender verwendet wird,
einen Polarisationsdemultiplexer (21), der konfiguriert ist zum Trennen zweier orthogonaler Polarisationssignale des übertragenen abgetasteten Signals,
eine Trägersignalwiederherstellungseinheit (23), die konfiguriert ist zum Zurückgewinnen der Modulationssymbole aufgrund des Modulationsformats, das von dem Sender (1) verwendet wird, und
eine Rückbildungseinheit (25) und eine Decodiereinheit (27), die konfiguriert sind zum Zurückgewinnen des Bitstroms aufgrund der zurückgewonnenen Modulationssymbole.

## Revendications

1. Procédé de modulation numérique pour transmission de signal par le biais d'un réseau optique, comprenant une étape d'encodage et de mappage (101) de production d'une série de symboles de modulation à partir d'un train de bits,
**caractérisé en ce que** la série de symboles de modulation produits peut être divisée en séquences successives de symboles hybrides, une séquences de symboles hybrides comprenant des symboles d'au moins deux formats de modulation différents, différentes puissances étant attribuées aux symboles selon leurs formats de modulation, de telles séquences de symboles hybrides et puissances attribuées produisant des tonalités d'horloge à des fréquences correspondant à un décalage d'une fraction du débit de symboles sur les deux côtés de la fréquence porteuse, ladite fraction étant inférieure à la fraction obtenue avec des séquences de symboles comprenant un seul format de modulation, lesdites tonalités d'horloge permettant une récupération de rythme après la transmission du signal.

2. Procédé de modulation numérique selon la revendication 1, dans lequel une puissance de transmission plus élevée est attribuée aux symboles ayant un format de modulation d'ordre plus élevé.

3. Procédé de modulation numérique selon la revendication 2, dans lequel l'attribution de puissance de transmission est choisie afin de produire des taux d'erreurs sur les bits équivalents avec les formats de modulation différents.

4. Procédé de modulation numérique selon l'une des revendications précédentes, dans lequel les formats de modulation différents font référence à des formats de modulation d'amplitude en quadrature ou formats de modulation par déplacement de phase.

5. Procédé de modulation numérique selon l'une des revendications précédentes, dans lequel la séquence de symboles hybrides comprend deux symboles associés respectivement à deux formats de modulation différents.

6. Procédé de modulation numérique selon l'une des revendications précédentes, dans lequel ce procédé est utilisé lorsque la largeur de bande spectrale attribuée à un canal est inférieure à une valeur prédéterminée.

7. Procédé de modulation numérique selon la revendication 6, dans lequel la valeur prédéterminée est déterminée sur la base de la largeur de bande spectrale des filtres traversés le long de la transmission.

8. Procédé de modulation numérique selon la revendication 6 ou 7, comprenant une étape de mise en forme d'impulsions (102) dans lequel des signaux de bande de base avec un affaiblissement prédéterminé sont produits à partir de la série de symboles de modulation et dans lequel la valeur prédéterminée implique l'utilisation d'une valeur d'affaiblissement inférieure à 0,4.

9. Procédé de modulation numérique selon la revendication 8, comprenant une étape d'échantillonnage (103) dans laquelle des signaux de bande de base sont appliqués sur un signal porteur pour produire un signal échantillonné.

10. Procédé pour transmettre un signal optique depuis un nœud d'entrée (50) à un nœud de sortie (60), comprenant :
- une étape (1001) pour déterminer la largeur de bande spectrale disponible pour les canaux de transmission,
- une étape (1002) pour déterminer un format de modulation standard,
- une étape (1003) pour déterminer un format de modulation hybride comprenant une combinaison d'au moins deux formats de modulation, dans laquelle différentes puissances sont attribuées aux symboles selon leurs formats de modulation,
- une étape (1004) de choix entre le format de modulation standard et le format de modulation hybride selon la largeur de bande spectrale disponible déterminée,
- une étape (1005) de modulation d'un signal porteur selon le format de modulation choisi au niveau du nœud d'entrée (50),
- une étape (1006) de transmission du signal modulé depuis le nœud d'entrée (50) au nœud de sortie (60) par l'intermédiaire de moyens de transmission optiques (13),
- une étape (1007) de démodulation du signal transmis au niveau du nœud de sortie (60),
dans lequel dans le cas du choix du format de modulation hybride, l'étape de modulation (1005) est réalisée selon le procédé de modulation numérique d'une des revendications précédentes.

11. Procédé selon la revendication 10, dans lequel l'étape de démodulation (1007) comprend :
- une sous-étape (105) pour compenser une dispersion chromatique,
- une sous-étape (106) de récupération de rythme comprenant la détection de tonalités d'horloge du signal transmis, la fréquence des tonalités d'horloge étant en fonction du choix de format de modulation,
- une sous-étape (107) de démultiplexage par polarisation en fonction du choix de format de modulation,
- une sous-étape (108) de récupération de porteuse en fonction du choix de format de modulation,
- une sous-étape (109) de démappage et de décodage pour récupérer le train de bits en fonction du choix de format de modulation.

12. Transmetteur optique (1) comprenant un encodeur (5) et un mappeur (7) configurés pour produire une série de symboles de modulation d'au moins des premier et second formats de modulation à partir d'un train de bits, **caractérisé en ce que** l'encodeur (5) et le mappeur (7) sont configurés pour produire des séquences successives de symboles hybrides, une séquences de symboles hybrides comprenant des symboles d'au moins deux formats de modulation différents, différentes puissances étant attribuées aux symboles selon leurs formats de modulation, de telles séquences de symboles hybrides et puissances attribuées produisant des tonalités d'horloge à des fréquences correspondant à un décalage d'une fraction du débit de symboles sur les deux côtés de la fréquence porteuse, ladite fraction étant inférieure à la fraction obtenue avec des séquences de symboles comprenant un seul format de modulation.

13. Transmetteur optique (1) selon la revendication 12, dans lequel l'encodeur (5) et le mappeur (7) sont également configurés pour produire une série de symboles de modulation ayant le même format de modulation à partir d'un train de bits et dans lequel le transmetteur optique (1) comprend également une unité de traitement configurée pour déterminer une largeur de bande spectrale disponible pour les canaux de transmission et pour déterminer un format de modulation à appliquer selon ladite largeur de bande spectrale disponible et dans lequel l'encodeur (5) et le mappeur (7) sont configurés pour appliquer le format de modulation déterminé pour produire une série de symboles de modulation.

14. Transmetteur optique (1) selon la revendication 12 ou 13, comprenant également une unité de mise en forme d'impulsions (9) configurée pour produire des signaux de modulation sur la base des symboles de modulation produits et sur la base d'une fonction de filtrage prédéterminée ayant un affaiblissement prédéterminé.

15. Récepteur optique (15) configuré pour recevoir un signal échantillonné transmis depuis un transmetteur optique (1) selon une des revendications 12 à 15 par le biais de moyens de transmission optiques (13), ledit récepteur optique comprenant :
- une unité de compensation de dispersion chromatique (17) configurée pour appliquer un filtre de dispersion chromatique sur le signal échantillonné reçu,
- une unité de récupération de rythme (19) configurée pour détecter des tonalités d'horloge à des fréquences en fonction du format de modulation utilisé par le transmetteur,
- un démultiplexeur par polarisation (21) configuré pour séparer deux signaux à polarisation orthogonale du signal échantillonné transmis,
- une unité de récupération de porteuse (23) configurée pour récupérer les symboles de modulation sur la base du format de modulation utilisé par le transmetteur (1),
- un démappeur (25) et un décodeur (27) configurés pour récupérer le train de bits sur la base des symboles de modulation récupérés.
